# EUROPÄISCHE PATENTSCHRIFT

(11) **EP 3 036 789 B1**
(45) Veröffentlichungstag und Bekanntmachung des Hinweises auf die Patenterteilung: **02.08.2017**
(21) Anmeldenummer: 14792370.0
(22) Anmeldetag: 15.08.2014
(51) Int. Cl.: H01M 10/04, H01M 10/14, H01M 10/16, H01M 2/28

(54) **ANLAGE ZUR HERSTELLUNG VON SOWOHL AGM- ALS AUCH NASSBATTERIEN FÜR PKW UND NKW BATTERIETYPEN**
INSTALLATION FOR PRODUCING BOTH AGM AND WET-CELL BATTERIES FOR PASSENGER-CAR AND COMMERCIAL-VEHICLE BATTERY TYPES
INSTALLATION PERMETTANT DE PRODUIRE DES BATTERIES AUSSI BIEN AGM QU'HUMIDES POUR DES TYPES DE BATTERIE DE VOITURES PARTICULIÈRES ET DE VÉHICULES UTILITAIRES

(30) Priorität: 19.08.2013 DE 102013013605
(43) Veröffentlichungstag der Anmeldung: 29.06.2016
(73) Patentinhaber: Sasit Industrietechnik GmbH, 08056 Zwickau (DE)
(72) Erfinder: FRIEDENBERGER, André, 08427 Fraureuth (DE); MEIER, Jochen, 08118 Hartenstein (DE)
(74) Vertreter: Auerbach, Bettina
(86) Internationale Anmeldenummer: PCT/DE2014/000410
(87) Internationale Veröffentlichungsnummer: WO 2015/024547

(56) Entgegenhaltungen:
- WO-A1-91/05625
- WO-A1-2011/020469
- DE-A1-102012 021 784
- US-A- 4 175 725

## Beschreibung

Die Erfindung betrifft eine Anlage zur Herstellung von sowohl AGM-Batterien (Absorbed Glass Material), als auch Nassbatterien für PKW (Personenkraftwagen) und NKW (Nutzkraftwagen) Batterietypen, welche aus einer zentral angeordneten drehbar gelagerten Transportvorrichtung für den Transport der mit den zu bearbeitenden Batterieplatten bestückten Spannkassetten dient, aus den daran angeordneten Hub- und/oder Drehvorrichtung zu den einzelnen Bearbeitungsstationen der Anlage, sowie einer zentralen Steuervorrichtung. Bei den Bearbeitungsstationen handelt es sich um die Zuführstation mit Greifersystemen an den Transportvorrichtungen für das Zu- und Abführen der Batterieplattenpakete zu den Spannkassetten, das beheizbare Zinnbad mit einer Flussmittelbenetzungsvorrichtung, die Bleibadstation mit beheizbarem Bleischmelzkessel und um die Einboxstation mit ihren Greifersystemen zur Entnahme der Batterieplattenpakete aus den individuell gestaltbaren Spannkassetten und Zuführung und Einboxen dieser in die Batteriekästen.

Derartige Anlagen werden zur effizienten Herstellung von verschiedenen Autobatterien für den Personenkraftwagen- als auch für den Nutzkraftwagen-Bereich an einer Anlage benötigt.

Vorrichtungen zur Bearbeitung von Batterieplatten für das anschließende Einboxen in die Batteriekästen sind bereits aus dem Stand der Technik bekannt.

So beschreibt die PCT/DE2010/000979 eine Vorrichtung zur Bestückung und Ausrüstung von Kraftfahrzeug- Batteriegehäusen als Kompaktanlage, welche insgesamt vier Bearbeitungsstationen (1, 2, 3, 4), aufweist, welche um einen elektrisch angetriebenen Hub-/Drehtisch (5) jeweils um 90° versetzt angeordnet sind, wobei die Bearbeitungsstation 1 dem Zuführen von mit geprüften Batterieplatten bestückten Spannkassetten 6 dient und dazu wenigstens ein Zuführband, von oben absenkbarer Fahnenausrichter, von oben absenkbarer Fahnenanbieger und einen Schwenkmechanismus aufweist.

Eine weitere Station dient dem Verzinnen der Fahnen der Batterieplatten.

Dazu weist diese wenigstens eine zuführbare Fluxvorrichtung, einen Abstreifer, eine Trocknungseinrichtung und einen Schwenkmechanismus auf.

Die Bearbeitungsstation 3 dient als Bleistation und weist dazu wenigstens eine Gießbrückenausstoßvorrichtung, eine beheizbare Bleiformen und eine Absetz-/Hubvorrichtung auf. Die Bearbeitungsstation 4 ist die Einboxstation und weist dazu wenigstens einen Schwenkmechanismus, wenigstens ein mit wenigstens sechs Greifern ausgestattetes Greiferportal, wenigstens zwei Einboxrahmen und mit einer Drehvorrichtung ausgestattete Förderbänder auf.

Nachteil dieser Kompaktanlage liegt darin, dass nur Batterieplatten eines Batterietyps verarbeitet werden können und beim Wechsel des Bleibades die Anlage still gelegt werden muss.

Auf diesen in der DE PCT/DE2010/000979 beschriebenen Lösungsmerkmalen basiert die Anlage. Jedoch auf Grund der unterschiedlichen Batterietypen, wie Nassbatterie, bei denen die Säure zwischen den Batterieplatten frei beweglich eingefüllt wird und AGM (Absorbed Glass Material), bei denen die Säure zwischen den Platten in dem AGM gebunden ist und beide sowohl für den PKW-Bereich als auch für den LKW - Bereich eingesetzt werden, stellt sich das Problem beim Herstellen auf einer Anlage, dass einerseits unterschiedliche Anforderungen an die Bearbeitungsabläufe der Batterieplatten, wie unterschiedliche Bleizusammensetzungen, mit oder ohne Zinnbad, gestellt werden und andererseits unterschiedliche Batterieplattengrößen und Dimensionen der Batterieplattenpakte während der Bearbeitungsprozesse zu handhaben sind. Eine weitere ähnliche Anlage ist auch aus der Druckschrift DE 10 2012 021 784 A1 bekannt. Aufgabe der Erfindung ist es, eine Anlage zu schaffen, mit deren Hilfe die Nachteile des Standes der Technik überwunden werden können. Die Anlage soll sich dadurch auszeichnen, dass auf einer Anlage das Bearbeiten und Einboxen sowohl von AGM- Batterieplattenpakten als auch von Nassbatterieplattenpaketen sowohl für den PKW-Bereich als auch für den LKW-Bereich und dass mit jeweils mindestens 6 verschiedenen Typengrößen realisiert werden kann.
Dazu sollen zusätzlich die Taktzeiten verringert werden und notwendige Umrüstmaßnahmen der Anlage sollen Zeit sparend und wenn möglich, weitestgehend während der Taktzeiten realisiert werden können.

Erfindungsgemäß werden die Aufgaben durch die Merkmale des Anspruchs 1 gelöst, wobei die vorteilhaften Ausgestaltungen in den Unteransprüchen beschrieben sind.

Danach besteht die Anlage zur Herstellung von sowohl AGM als auch Nassbatterien für PKW und NKW Batterietypen zunächst aus einer zentral angeordneten drehbar gelagerten Transportvorrichtung für den Transport der mit den zu bearbeitenden Batterieplatten bestückten Spannkassetten, mit Hub- und/oder Drehvorrichtung zu den einzelnen Bearbeitungsstationen der Anlage, wie der Zuführstation mit Greifersystemen an den Transportvorrichtungen für das Zu- und Abführen der Batterieplattenpakete zu den Spannkassetten mit Fahnenausricht- und Fahnenanbiegevorrichtung, dem beheizbaren Zinnbad mit Flussmittelbenetzungsvorrichtung und Trocknungseinrichtung, der Bleibadstation mit Bleischmelzkessel und der Einboxstation mit Greifersystemen zur Entnahme der Batterieplattenpakete aus den individuell gestaltbaren Spannkassetten und Zuführung und Einboxen dieser in die Batteriekästen sowie einer zentralen Steuervorrichtung, wie sie aus der DE PCT/DE2010/000979 bekannt sind.

Erfindungsgemäß werden an der Bleibadstation am stationären Bleischmelzkessel zum heißen Bleibadwechsel zwei beheizbare und fahrbare Bleibadwagen zuordenbar angeordnet, von denen einer der beiden Wagen das zweite Bleibad beinhaltet. An beiden Wagen ist eine dem Bleibadwechsel dienende Pump-/Saugvorrichtung angeordnet. Das Blei wird im geschmolzenen heißen Zustand aus dem Bleikessel in den leeren Wagen gepumpt.
Da sowohl die Pump- Saugvorrichtung um die Drehachse (B) als auch die fest auf dem Wagen angeordnete Schwenkachse um die Drehachse (A) jeweils separat schwenkbar angeordnet sind und die Pumpe-Saugvorrichtung mit dem daran angeordneten Saugrohr und Pumpauslaufrohr über eine Verbindungsachse mit einer Hubvorrichtung mit der fest angeordneten Drehachse des Wagens in Verbindung steht, können nunmehr gleichzeitig das Saugrohr aus dem Kessel und das Pumpauslaufrohr aus dem Wagen gehoben werden und die Pumpe mit den daran angeordneten Saug- und Pumpauslaufrohr wird sowohl um die Drehachse (A) als auch um die Drehachse (B) gedreht und in eine Grundstellung an dem Wagen positioniert. Die Position der Wagen wird getauscht, so dass der zweite Wagen mit dem zweiten Bleibad mit spezieller Zusammensetzung an den Kessel herangeführt wird. Durch Absenken der Konstruktion an der Hubvorrichtung der festen Schwenkachse werden das Pumpauslaufrohr in den Kessel und das Saugrohr in das zweite Bleibad eingetaucht. Dabei wird auch das oberhalb an der Pumpe angeordnet Saugrohr mit seinem Ende in den Kessel wieder positioniert. Bei Bedarf kann die Pumpe mit Ihren Pump-Saugvorrichtungen auch auf der Verbindungsachse waagerecht in seiner Lage veränderbar positioniert werden. Die Pumpe saugt bzw. pumpt nunmehr das geschmolzene zweite Bleibad aus dem zweiten Wagen in den Bleikessel um.
Der Vorteil dieser Lösung besteht darin, dass das Bleibad immer durch den Austausch der Bleibadwannen komplett im aufgeheizten Zustand durch fahrbare Bleibadwagen, die an den Kessel zu- bzw. abgeführt werden können auf konstanter Temperatur gehalten werden kann, auch beim Abpumpen und beim Befüllvorgang. Es kann sehr schnell umgerüstet werden, da alle Schmelzprozesse während des laufenden Betriebes vorbereitend organisiert werden können.

Um der Situation gerecht zu werden, dass unterschiedliche Batterietypen gefertigt werden sollen, ist es notwendig, dass unterschiedlich dimensionierte Batterieplattenpakte vom Greifersystem erfasst werden müssen. Aber auch die Anforderungen an das Einboxen der fertigen Batterieplattenpakete in die unterschiedlich dimensionierten Batteriekästen führt zu Problemen, wenn man die herkömmliche Technik einsetzt. Die AGM-Batterieplattenpakete lassen sich in die Batteriekästen schwerer Einboxen als die Nassbatterieplattenpakete.
Um dieses Problem zu lösen, ist das Greifersystem erfindungsgemäß gleichzeitig mit einem Stopfmechanismus und einem Lagepositioniermechanismus ausgestattet.

Dazu besteht die Möglichkeit, dass das Greifersystem mit einem dem Greifen der Batterieplattenpakte dienenden Pneumatikzylindern und einem zweiten dem Lagepositionieren der fertig bearbeiteten Batterieplattenpakete aus dem Greiferfingern in die bereitgestellten Batteriekästen dienenden Pneumatikzylinder ausgestattet ist. An diesem zweiter Pneumatikzylinder ist am unteren Ende ein Stopfstempel so angeordnet, dass er zwischen den Greiferfingern auf die Batterieplattenpakete greift und diese Plattenpakete in die Batteriekästen positioniert.
Der Vorteil dieser Lösung besteht darin, dass auf Grund dieses Kombinationswerkzeuges einerseits ein sicheres Einboxen durch eine zusätzliche Lagepositionierung der Batterieplattenpakete realisiert werden kann und andererseits eine Taktzeitverkürzung statt findet, da durch das kombinieren dieser Verfahrensschritte in einem Werkzeug die sonst notwendigen zusätzlichen Werkzeugwege eingespart werden können.

Um auf die unterschiedlichen Dimensionen der Plattenpakete unkompliziert reagieren zu können, ohne die Spannkassetten wechseln zu müssen, ist es erforderlich die Spannkassetten auf die jeweilige Größe des Plattenpaketes umzurüsten. Schnell und unkompliziert wird dies durch das Anordnen einer zusätzlichen Dimensioniereinlage in die Spannkassette erreicht. Vorzugsweise ist diese Dimensionierungseinlage eine dem Höhenausgleich der verschieden dimensionierten und zu verarbeitenden Batterieplattenpakte dienende austauschbare Einlagebodenplatte. Dadurch kann das erforderliche Höhenniveau der verschiedenen Plattenpakete schnell und effektiv ausgeglichen werden, ohne dass die Spannkassetten gewechselt werden müssen.

Da jeder Batterietyp, ob Nassbatterie oder AGM-Batterie, einen separaten Bearbeitungsablauf erfordert, ist die Steuereinheit mit den für die verschiedenen Batterieplattentypen notwendigen Verarbeitungsablaufprogrammen ausgestattet.

Vorteilhafter Weise ist an der Einboxstation 4 eine Greiferkopfwechselstation mit Greiferkopfmagazin angeordnet, wodurch die Greiferköpfe mit Schnellwechselverschluss ausgestattet sicher und schnell auf die Batterieplatten-Paketgröße umgerüstet werden kann.

Mit einer derart gestalteten Anlage zur Herstellung von sowohl AGM- als auch Nassbatterien für PKW und NKW Batterietypen können mehr als 6 verschieden dimensionierte Batteriegrößen jeder der beiden Batteriearten hergestellt werden. Es kann auf die bestehende Technik zurückgegriffen werden und diese mit den vorgeschlagenen Lösungen nachgerüstet werden, um die vorhandene Technik auf die weiteren Batterietyp-Herstellungsverfahren umzurüsten. Die Taktzeiten bei der Bearbeitung der Batterieplattenpakte bis hin zum Einboxen dieser in die Batteriekästen werden wesentlich verkürzt.
Die Umrüstzeiten auf eine andere Batteriegröße und/oder auf einen anderen Batterietyp konnte durch die Lösungen im Wesentlichen auf die Zeit für den Bleibadaustausch reduziert werden. Die Anlagenausnutzung wurde immens gesteigert und die Kosten für zusätzliche Investitionen für Neuanlagen konnte eingespart werden.

Die Lösung soll anhand eines Ausführungsbeispiels näher erläutert werden.

In der beigefügten Zeichnung zeigen:
- Fig. 1: eine schematische Draufsicht als Übersichtsskizze der Anlagenanordnung;
- Fig. 2: eine schematische Seitenansicht auf die Bleibadstation in der Phase der Kesselbefüllung aus dem Wagen 3.2;
- Fig. 3: eine schematische Seitenansicht auf die Bleibadstation in der Phase der Kesselentleerung unter Befüllung des Leer-Wagens 3.3;
- Fig. 4: eine schematische Seitenansicht auf das Greifersystem 4.1 mit den Plattenpaket zwischen den Greiferfingern vor den Angriff des Stopfers;
- Fig. 5: eine schematische Seitenansicht auf das Greifersystem 4.1 mit dem Plattenpaket im eingeboxten Zustand innerhalb des Batteriekastens unter Einfluss des Stopfers;
- Fig. 6: die schematische Schnittdarstellung einer Spannkassette 6 mit Bodeneinlageplatte 6.1.

### Ausführungsbeispiel:

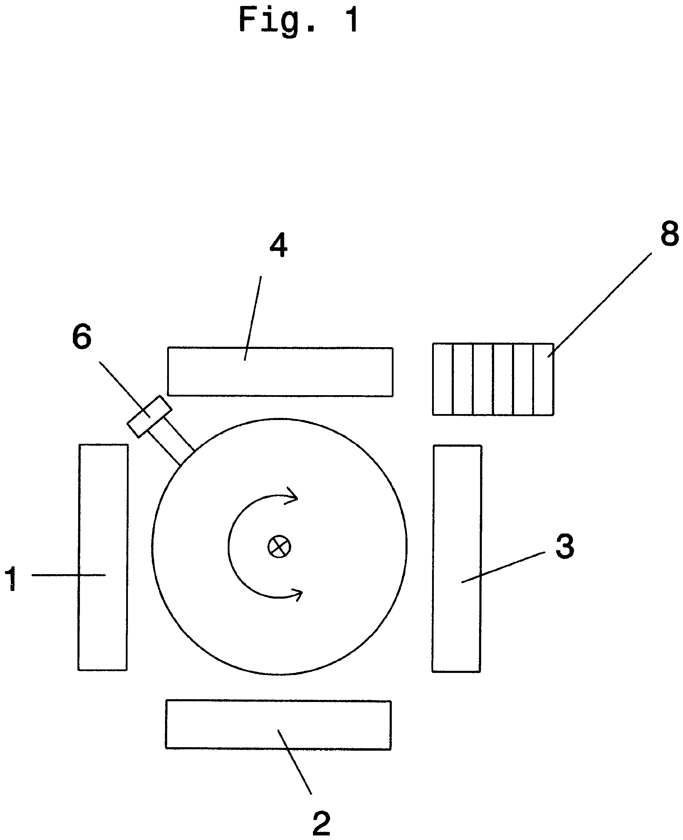

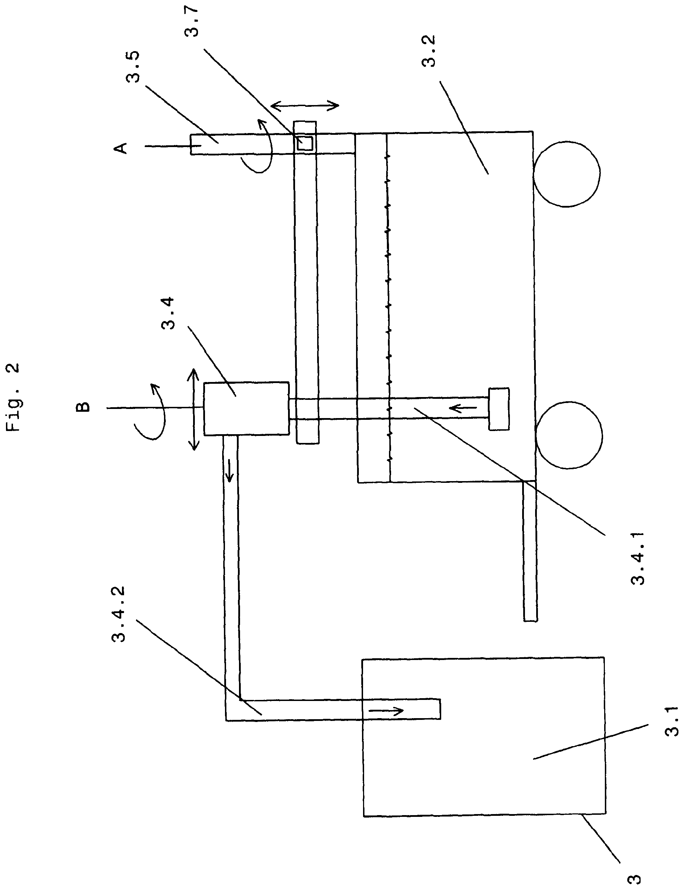

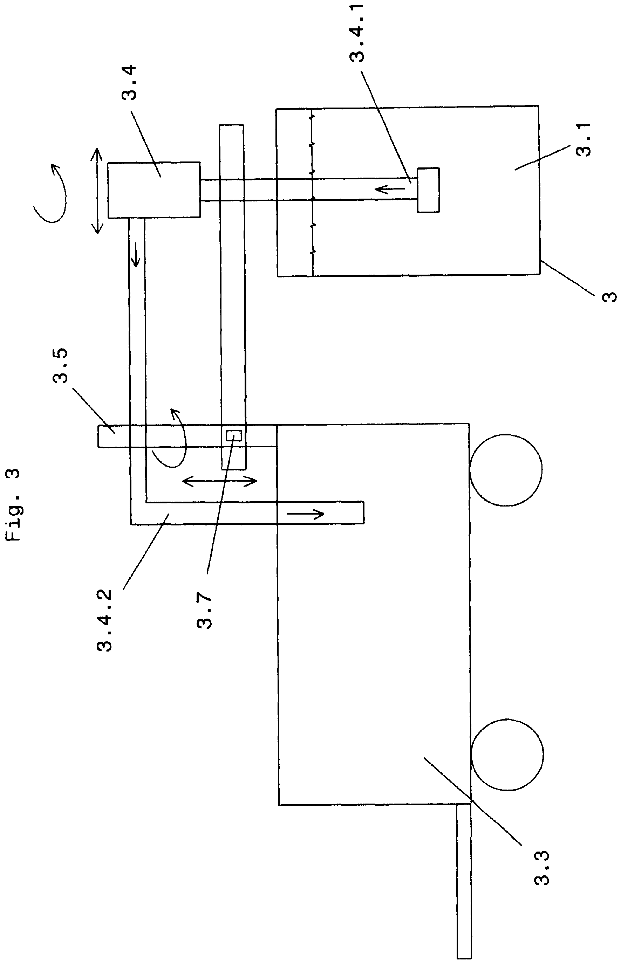

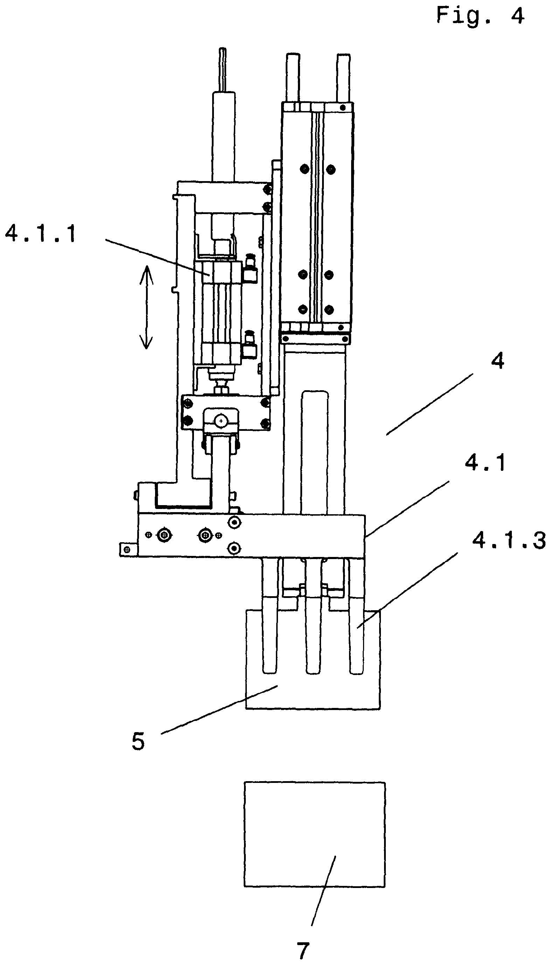

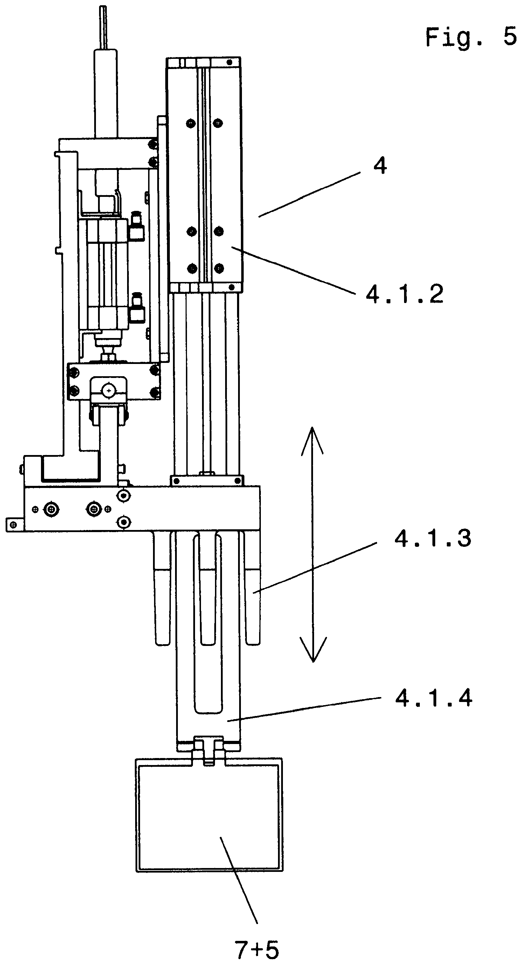

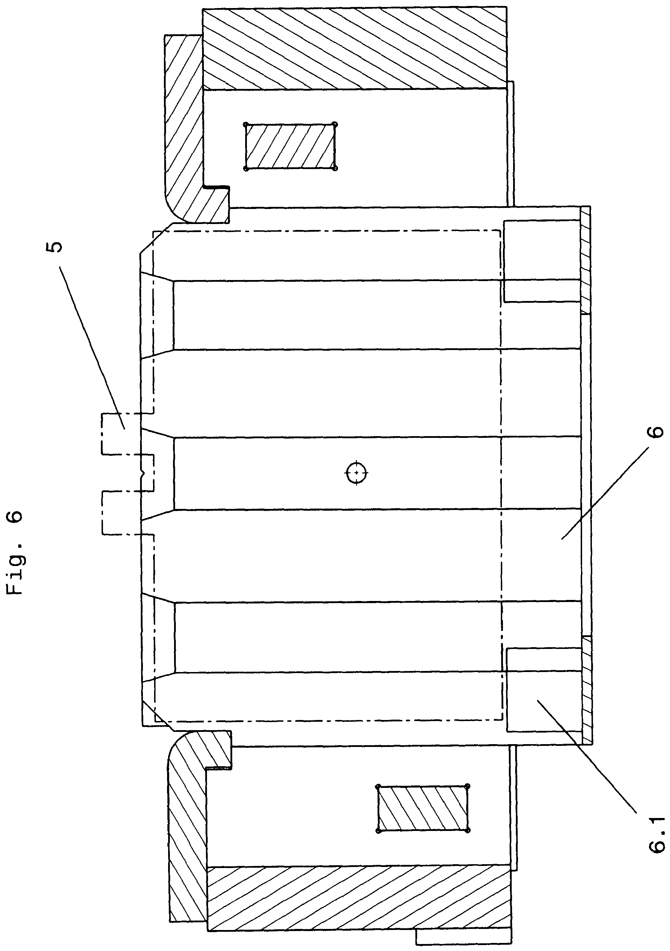

Gemäß der Figuren 1 bis 6 besteht eine Anlage zur Herstellung von sowohl AGM- als auch Nassbatterien für PKW und NKW Batterietypen aus einer zentral angeordneten drehbar gelagerten Transportvorrichtung für den Transport der mit den zu bearbeitenden Batterieplatten bestückten Spannkassetten, mit Hub- und/oder Drehvorrichtung zu den einzelnen Bearbeitungsstationen der Anlage, wie der Zuführstation 1 mit seinem Greifersystemen an den Transportvorrichtungen für das Zu- und Abführen der Batterieplattenpakete zu den Spannkassetten mit Fahnenausricht- und Fahnenanbiegevorrichtung, dem beheizbaren Zinnbad mit Flussmittelbenetzungsvorrichtung und Trocknungseinrichtung als Bearbeitungsstation 2, der Bleibadstation mit Bleischmelzkessel als Bearbeitungsstation 3 und der Einboxstation 4 mit seinen Greifersystemen 4.1 zur Entnahme der Batterieplattenpakete 5 aus den individuell gestaltbaren Spannkassetten 6 und Zuführung und Einboxen dieser in die Batteriekästen 7, sowie einer zentralen Steuervorrichtung, wie sie aus der DE PCT/DE2010/000979 A1 bereits bekannt ist.

Um diese Anlage für die Herstellung von verschieden dimensionierten Batteriegrößen und verschiedenen Batterietypen einsatzfähig zu gestalten, so dass alle Größen der AGM-Batterietypen als auch der Nassbatterietypen für PKW als auch für NKW gefertigt werden können, weist die Anlage an der Bleibadstation 3 am stationären Bleischmelzkessel 3.1 zum Bleibadwechsel im heißen geschmolzenen Zustand zwei beheizbare und fahrbare Bleibadwagen 3.2, 3.3 auf, welche dem Bleikessel zuordenbar sind. Einer der beiden Wagen beinhaltet das zweite Bleibad, wobei an den beiden Wagen 3.2, 3.3 jeweils eine dem Bleibadwechsel dienende Pump-/Saugvorrichtung 3.4 mit Hubfunktion an einer festen Schwenkachse 3.5 über eine Verbindungsachse 3.6 drehbar und heb- und absenkbar angeordnet ist. Auf der Verbindungsachse 3.6 ist die Pump-/Saugvorrichtung 3.4 wiederum in waagerechter Richtung verschiebbar angeordnet. Sowohl die Pump- Saugvorrichtung 3.4 ist um die Drehachse (B) als auch die auf dem Wagen angeordnete Schwenkachse 3.5 ist um die Drehachse (A) jeweils separat schwenkbar angeordnet. Die Pumpe- Saugvorrichtung 3.4 ist jeweils mit einem oberen Pumpauslaufrohr 3.4.2 und einem unteren Saugrohr 3.4.1 ausgestattet. Dadurch besteht die Möglichkeit, dass der volle Kessel in den leeren Wagen ausgepumpt werden kann und nach dem Wagenaustausch kann aus dem vollen Wagen das andere geschmolzen vorliegende Bleibad in den leeren Kessel hineingepumpt werden.

Dazu sind das Pumpauslaufrohr und das Saugrohr nur entsprechend zu positionieren. Das Bleibad kann vorteilhafter weise sowohl im Kessel als auch in den Wagen beheizt und auf Temperatur gehalten werden, so dass der Einsatz des Bleibades sofort nach dem Befüllen des Kessels erfolgen kann. Weder die Qualität des Bleibades leidet unter dem Austausch noch die Qualität des Angusses.

Um den unterschiedlichen Anforderungen von AGM-Batterieplatten, welche sich schwerer komprimieren lassen, und Nassbatterieplatten, welche sich leichten komprimieren lassen, beim Einboxen gerecht zu werden, ist das Greifersystem 4.1 an der Einboxstation 4 gleichzeitig mit einem separat ansteuerbaren Stopfmechanismus ausgestattet.

Dazu ist der Greifer mit einem dem Greifen der Batterieplattenpakte 5 dienenden Pneumatikzylindern 4.1.1 und einem zweiten dem Positionieren der fertig bearbeiteten Batterieplattenpakete 5 aus dem Greiferfingern 4.1.3 in die Batteriekästen 7 dienenden separat ansteuerbaren Pneumatikzylinder 4.1.2 ausgestattet. Dazu ist am Pneumatikzylinder 4.1.2 einerseits ein Stopfstempel 4.1.4 so angeordnet, dass er zwischen den Greiferfingern 4.1.3 auf die Batterieplattenpakete 5 greift und andererseits ein dem Spreizen der Greiferfinger 4.1.3 dienender Spreizkeil 4.1.5 am unteren Ende des Pneumatikzylinders 4.1.2 angeordnet.
Werden AGM-Batterieplattenpakete 5 bearbeitet und sind diese zum Einboxen vom den Greiferfingern 4.1.3 aufgenommen und über den Batteriekästen 7 positioniert, fährt der Pneumatikzylinder 4.1.2 mit dem am unteren Ende angeordneten Stopfstempel 4.1.4 nach unten und der Zylinder des Spreizkeiles 4.1.3 fährt gleichzeitig nach oben, um das Öffnen der Greiferfinger 4.1.3 zu bewirken. Der Stopfstempel 4.1.4 fährt zwischen den Greiferfingern 4.1.3 nach unten und drückt auf das Batterieplattenpaket 5 und drückt dieses in den leeren Batteriekasten 7. Dadurch wird gewährleistet, dass sowohl Nassbatterieplattenpakete als auch AGM-Batterieplattenpakete in guter Qualität und in der notwendigen Taktzeit schonend in die bereitgestellten leeren Batteriekästen von dem Gleichen Werkzeug der Anlage eingeboxt werden können. Dadurch werden wertvolle Taktzeiten eingespart und ein Umrüsten des Werkzeuges beim Produktwechsel ist nicht erforderlich.

Da jedoch die Batterieplattenpakete zu den verschiedenen Batterietypen und -größen unterschiedlich dimensioniert sind, ist es erforderlich, die Spannkassette 6 auf die verschiedenen Größen anzupassen. Dazu weist die Spannkassette 6 wenigstens eine Dimensioniereinlage auf. Diese ist beispielsweise als Einlagebodenplatte 6.1 ausgebildet und dient dem Höhenausgleich der verschieden dimensionierten und zu verarbeitenden Batterieplattenpakte 5. Dadurch werden der Umbau der Anlage und die Ausrüstung mit anderen Spannkassetten beim Produktwechsel sicher vermieden. Ebenso erübrigen sich die Kosten für zusätzlich bereit zu stellende größenangepasste Spannkassetten.

Sollte für das Einboxen der Batterieplattenpakete an der Einboxstation 4 ein anderer Greifereinsatz notwendig werden, dann ist vorteilhafter weise an der Einboxstation eine Greiferkopfwechselstation mit Greiferkopfmagazin angeordnet. Dadurch wird bei Einsatz mit Schnellwechselverbindungen wiederum Zeit für den Greiferwechsel eingespart.

Um eine schnelle Umrüstung auf den anderen Batterietyp und/oder die andere Batteriegröße schnellstmöglich zu realisieren, ist die zentrale Steuereinheit vorteilhafter Weise mit den für die verschiedenen Batterieplattentypen notwendigen Verarbeitungsablaufprogrammen ausgestattet.

Diese technischen Lösungen zur Realisierung der Fertigung von sowohl AGM- als auch Nassbatterien für PKW und NKW sind sehr kostengünstig, unkompliziert und in kurzer Zeit zu realisieren und führen zu einem enormen wirtschaftlichen Vorteil bei der Auslastung der Anlage. Bereits bestehende Anlagen können kostengünstig und mit geringem Zeitaufwand nachgerüstet werden.

### Bezugszeichenliste

- 1: Zuführstation
- 2: Zinnbadstation
- 3: Bleibadstation
- 3.1: Bleischmelzkessel
- 3.2: Bleibadwagen 1
- 3.3: Bleibadwagen 2
- 3.4: Pump-/Saugvorrichtung mit Pumpe
- 3.4.1: Pump-/Saugrohr
- 3.4.2: Pumpenauslaufrohr
- 3.5: Schwenkachse
- 3.6: Verbindungsachse
- 3.7: Hubvorrichtung
- 4: Einboxstation
- 4.1: Greifersystem
- 4.1.1: Pneumatikzylinder für den Greifer
- 4.1.2: Pneumatikzylinder für den Stopfstempel
- 4.1.3: Greiferfinger
- 4.1.4: Stopfstempel
- 5: Batterieplattenpakete
- 6: Spannkassette
- 6.1: Dimensioniereinlage
- 7: Batteriekästen
- 8: Greiferkopfmagazin an Station 4
- A: Drehachse des Schenklagers
- B: Drehachse Pumpe

## Patentansprüche

1. Anlage zur Herstellung von sowohl AGM- als auch Nassbatterien für PKW und NKW Batterietypen, bestehend aus einer zentral angeordneten drehbar gelagerten Transportvorrichtung für den Transport der mit den zu bearbeitenden Batterieplatten bestückten Spannkassetten, mit Hub- und/oder Drehvorrichtung zu den einzelnen Bearbeitungsstationen der Anlage, wie
- der Zuführstation (1) mit Greifersystemen (1.1) an den Transportvorrichtungen für das Zu- und Abführen der Batterieplattenpakete zu den Spannkassetten (5) mit Fahnenausricht- und Fahnenanbiegevorrichtung,
- dem beheizbaren Zinnbad (2) mit Flussmittelbenetzungsvorrichtung und Trocknungseinrichtung,
- der Bleibadstation (3) mit Bleischmelzkessel (3.1) und
- der Einboxstation (4) mit Greifersystemen (4.1) zur Entnahme der Batterieplattenpakete (5) aus den individuell gestaltbaren Spannkassetten (6) und Zuführung und Einboxen dieser in die Batteriekästen (7), sowie einer zentralen Steuervorrichtung,
**dadurch gekennzeichnet,**
- **dass** an der Bleibadstation (3) am stationären Bleischmelzkessel (3.1) zum heißen Bleibadwechsel zwei beheizbare und fahrbare Bleibadwagen (3.2, 3.3) zuordenbar angeordnet sind, von denen einer der beiden Wagen das zweite Bleibad beinhaltet, wobei an beiden Wagen (3.2, 3.3) eine dem Bleibadwechsel dienende Pump-/Saugvorrichtung (3.4) mit Hubfunktion angeordnet ist und sowohl die Pump- Saugvorrichtung (3.4) um die Drehachse (B) als auch die fest auf dem Wagen angeordnete Schwenkachse (3.5) um die Drehachse (A) jeweils separat schwenkbar angeordnet sind und die Pumpe-/Saugvorrichtung (3.4) mit einem oberen Pumpauslaufrohr (3.4.2) und einem im unteren Bereich der Pumpe angeordneten Saugrohr (3.4.1) über eine Verbindungsachse (3.6) mit Hubvorrichtung (3.7) mit der fest angeordneten Schwenkachse (3.5) des Wagens (3.2, 3.3) lageveränderbar in Verbindung steht,
- **dass** das Greifersystem (4.1) gleichzeitig mit einem separat ansteuerbaren Stopfmechanismus ausgestattet ist und
- **dass** die Spannkassette zur Aufnahme unterschiedlich in Größe und Form dimensionierter Batterieplattenpakte wenigstens eine Dimensioniereinlage (6.1) aufweist.
- **dass** die Steuereinheit mit den für die verschiedenen Batterieplattentypen notwendigen Verarbeitungsablaufprogrammen ausgestattet ist.

2. Anlage zur Herstellung von sowohl AGM- als auch Nassbatterien für PKW und NKW Batterietypen, nach dem Anspruch 1, **dadurch gekennzeichnet, dass** das Greifersystem (4.1) mit einem dem Greifen der Batterieplattenpakte (6) dienenden Pneumatikzylindern (4.1.1) und einem zweiten dem Lagepositionieren der fertig bearbeiteten Batterieplattenpakete (6) aus dem Greiferfingern (4.1.3) in die Batteriekästen (7) dienenden separat ansteuerbaren Pneumatikzylinder (4.1.2) ausgestattet ist, wobei am Pneumatikzylinder (4.1.2) einerseits ein Stopfstempel (4.1.4) so angeordnet ist, dass er zwischen den geöffneten Greiferfingern auf die Batterieplattenpakete greift und andererseits ein dem Spreizen der Greiferfinger dienender Spreizkeil am Pneumatikzylinder (4.1.2) angeordnet ist.

3. Anlage zur Herstellung von sowohl AGM- als auch Nassbatterien für PKW und NKW Batterietypen nach einem der Ansprüche 1 und 2, **dadurch gekennzeichnet, dass** zum individuellen Anpassen der unterschiedlich dimensionierter Batterieplattenpakte (5) die Spannkassetten (6) eine dem Höhenausgleich der verschieden dimensionierten und zu verarbeitenden Batterieplattenpakte (5) dienenden austauschbaren Einlagebodenplatte (6.1) aufweisen.

4. Anlage zur Herstellung von sowohl AGM- als auch Nassbatterien für PKW und NKW Batterietypen nach den Ansprüchen 1 bis 3, **dadurch gekennzeichnet, dass** an der Einboxstation (4) eine Greiferkopfwechselstation mit Greiferkopfmagazin (8) angeordnet ist.

## Claims

1. Installation for producing both AGM and wet-cell batteries for passenger-car and commercial-vehicle battery types, consisting of a centrally arranged rotatably mounted transport apparatus for transporting the clamping cartridges which are fitted with the battery plates to be processed, with a lifting and/or rotating apparatus to the individual processing stations of the installation, such as
- the feed station (1) with gripper systems (1.1) on the transport apparatuses for feeding and discharging the battery plate packs to the clamping cartridges (5) with lug-aligning and lug-bending apparatus,
- the heatable tin bath (2) with fluxing agent wetting apparatus and drying device,
- the lead bath station (3) with lead melting pot (3.1), and
- the boxing station (4) with gripper systems (4.1) for removing the battery plate packs (5) from the individually designable clamping cartridges (6) and feeding and boxing thereof in the battery cases (7),
and a central control apparatus,
**characterized**
- **in that** two heatable and movable lead bath carriages (3.2, 3.3) are arranged such that they can be allocated at the lead bath station (3) at the stationary lead melting pot (3.1) for hot lead bath changing, of which one of the two carriages contains the second lead bath, a pumping/suction apparatus (3.4) with lifting function which serves for lead bath changing being arranged on both carriages (3.2, 3.3), and both the pumping/suction apparatus (3.4) and the pivot axis (3.5) which is arranged fixedly on the carriage being arranged such that they can be pivoted in each case separately about the rotational axis (B) and about the rotational axis (A), respectively, and the pumping/suction apparatus (3.4) being connected in a positionally changeable manner by way of an upper pump outlet pipe (3.4.2) and a suction pipe (3.4.1) which is arranged in the lower region of the pump via a connecting axis (3.6) with lifting apparatus (3.7) to the fixedly arranged pivot axis (3.5) of the carriage (3.2, 3.3),
- **in that** the gripper system (4.1) is at the same time equipped with a separately actuable filling mechanism, and
- **in that** the clamping cartridge has at least one dimensioning insert (6.1) in order to receive battery plate packs dimensioned with different sizes and shapes, and
- **in that** the control unit is equipped with the necessary processing sequence programs for the various battery plate types.

2. Installation for producing both AGM and wet-cell batteries for passenger-car and commercial-vehicle battery types according to Claim 1, **characterized in that** the gripper system (4.1) is equipped with a pneumatic cylinder (4.1.1) which serves to grip the battery plate packs (6) and a second pneumatic cylinder (4.1.2) which can be actuated separately and serves to position the finally processed battery plate packs (6) from the gripper fingers (4.1.3) into the battery cases (7), a filling ram (4.1.4) being firstly arranged on the pneumatic cylinder (4.1.2) in such a way that it acts on the battery plate packs between the open gripper fingers, and secondly a spreading wedge which serves to spread the gripper fingers being arranged on the pneumatic cylinder (4.1.2).

3. Installation for producing both AGM and wet-cell batteries for passenger-car and commercial-vehicle battery types according to either of Claims 1 and 2, **characterized in that**, in order to individually adapt the battery plate packs (5) of different dimensions, the clamping cartridges (6) have an exchangeable insert bottom plate (6.1) which serves to compensate for the height of the battery plate packs (5) to be processed which are of different dimensions.

4. Installation for producing both AGM and wet-cell batteries for passenger-car and commercial-vehicle battery types according to Claims 1 to 3, **characterized in that** a gripper head changing station with gripper head store (8) is arranged at the boxing station (4).

## Revendications

1. Équipement pour fabriquer des batteries à la fois AGM et à cellules humides pour des types de batteries pour véhicules de tourisme et utilitaires, composé d'un dispositif de transport monté rotatif disposé de manière centralisée pour le transport des cassettes de serrage garnies des plaques de batterie à traiter, comprenant un dispositif de levage et/ou de rotation vers les stations de traitement individuelles de l'équipement, comme
- la station d'acheminement (1) munie de systèmes de préhenseurs (1.1) sur les dispositifs de transport pour l'acheminement et l'évacuation des paquets de plaques de batterie vers les cassettes de serrage (5) avec dispositif d'orientation de fanion et de cintrage de fanion,
- le bain d'étamage chauffant (2) avec dispositif de mouillage au flux et appareil de séchage,
- la station à bain de plomb (3) avec creuset à plomb (3.1) et
- la station de mise en boîte (4) avec système de préhenseurs (4.1) servant à prélever les paquets de plaques de batterie (5) des cassettes de serrage (6) pouvant être empilées individuellement et à les acheminer et les mettre en boîte dans les caissons à batterie (7),
ainsi qu'un dispositif de commande central **caractérisé**
**en ce que** deux chariots à bain de plomb (3.2, 3.3) chauffants et mobiles, qui peuvent être associés au creuset à plomb (3.1) fixe pour le changement de bain de plomb chaud, sont disposés au niveau de la station à bain de plomb (3), parmi lesquels l'un des deux chariots contient le deuxième bain de plomb, un dispositif de pompage/aspiration (3.4) avec fonction de levage servant au changement de bain de plomb étant disposé sur les deux chariots (3.2, 3.3) et le dispositif de pompage/aspiration (3.4) ainsi que l'axe de pivotement (3.5) monté en position fixe sur le chariot étant disposés de manière à pouvoir pivoter séparément, respectivement autour de l'axe de rotation (B) et autour de l'axe de rotation (A), et le dispositif de pompage/aspiration (3-4), pourvu d'un tube de sortie de pompe (3.4.2) supérieur et d'un tube d'aspiration (3.4.1) disposé dans la zone inférieure de la pompe, se trouvant en liaison avec possibilité de changement de position par le biais d'un axe de liaison (3.6) muni d'un dispositif de levage (3.7) avec l'axe de pivotement (3.5) monté en position fixe du chariot (3.2, 3.3),
- **en ce que** le système de préhenseurs (4.1) est en même temps équipé d'un mécanisme d'obturation commandable séparément et
- **en ce que** la cassette de serrage possède au moins un insert de dimensionnement (6.1) servant à accueillir des paquets de plaques de batterie dimensionnés avec des tailles et des formes différentes,
- **en ce que** l'unité de commande est équipée des programmes de déroulement de l'usinage nécessaires pour les différents types de plaques de batterie.

2. Équipement pour fabriquer des batteries à la fois AGM et à cellules humides pour des types de batteries pour véhicules de tourisme et utilitaires selon la revendication 1, **caractérisé en ce que** le système de préhenseurs (4.1) est équipé d'un vérin pneumatique (4.1.1) servant à la préhension des paquets de plaques de batterie (6) et d'un deuxième vérin pneumatique (4.1.2) commandable séparément, servant au positionnement des paquets de plaques de batterie (6) dont le traitement est terminé depuis les doigts de préhension (4.1.3) dans les caissons à batterie (7), un poinçon d'obturation (4.1.4) étant disposé d'un côté sur le vérin pneumatique (4.1.2) de telle sorte qu'il vient prendre les paquets de plaques de batterie entre les doigts de préhension ouverts et, d'un autre côté, une clavette d'écartement servant à écarter les doigts de préhension étant disposée sur le vérin pneumatique (4.1.2).

3. Équipement pour fabriquer des batteries à la fois AGM et à cellules humides pour des types de batteries pour véhicules de tourisme et utilitaires selon l'une des revendications 1 et 2, **caractérisé en ce que** pour l'adaptation individuelle des paquets de plaques de batterie (5) aux dimensions différentes, les cassettes de serrage (6) possèdent une plaque de fond à insérer (6.1) interchangeable servant à la compensation de hauteur des paquets de plaques de batterie (5) aux dimensions différentes à traiter.

4. Équipement pour fabriquer des batteries à la fois AGM et à cellules humides pour des types de batteries pour véhicules de tourisme et utilitaires selon les revendications 1 à 3, **caractérisé en ce qu'**une station de changement de tête de préhension munie d'un chargeur à têtes de préhension (8) est disposée au niveau de la station de mise en boîte (4).
